# EUROPÄISCHE PATENTSCHRIFT

(11) **EP 3 101 306 B1**
(45) Veröffentlichungstag und Bekanntmachung des Hinweises auf die Patenterteilung: **15.08.2018**
(21) Anmeldenummer: 16172845.6
(22) Anmeldetag: 03.06.2016
(51) Int. Cl.: F16F 1/38

(54) **TORSIONSDÄMPFER**
TORSIONAL DAMPER
AMORTISSEUR DE TORSION

(30) Priorität: 03.06.2015 DE 102015108836
(43) Veröffentlichungstag der Anmeldung: 07.12.2016
(73) Patentinhaber: Weberit Werke Dräbing GmbH, 57641 Oberlahr (DE)
(72) Erfinder: Gesenhues, Bernhard, 69488 Birkenau (DE); Dräbing, Norbert, 56587 Oberraden (DE)
(74) Vertreter: MFG Patentanwälte Meyer-Wildhagen Meggle-Freund Gerhard PartG mbB

(56) Entgegenhaltungen:
- WO-A1-2014/019787
- US-A- 2 915 306
- US-A1- 2007 018 369
- US-A1- 2009 078 079
- US-A1- 2010 055 999

## Beschreibung

### GEBIET DER ERFINDUNG

Die vorliegende Erfindung betrifft einen Torsionsdämpfer mit einem drehelastischen Ringelement, das eine innere und äußere Koppelfläche aufweist, wobei an der inneren Koppelfläche ein innerer Übertragungskörper fixiert ist und an der äußeren Koppelfläche ein Stützelement.

### HINTERGRUND DER ERFINDUNG

Es sind allgemein Torsionsdämpfer bekannt, bei denen ein inneres Anschlussstück über eine das Anschlussstück umgebende Elastomerstruktur mit einem das Anschlussstück in einem Abstand umgebenden Stützelement verbunden ist. In der einfachsten Ausführung ist dabei ein rohrförmiger Elastomerkörper an seiner Außenfläche mit einer zylindrischen Innenfläche eines Stützelementes verbunden und mit seiner Innenfläche mit einem darin angeordneten Übertragungskörper. Das Ringelement ist beispielsweise aus einem vulkanisierten Gummiwerkstoff ausgebildet und Übertragungskörper und Stützelement aus Metallwerkstoffen. Das Gummielement wird dabei form- und/oder stoffschlüssig mit dem Stützelement bzw. dem Übertragungskörper verbunden (verzahnt, verkeilt, verklebt, ein-/anvulkanisiert).

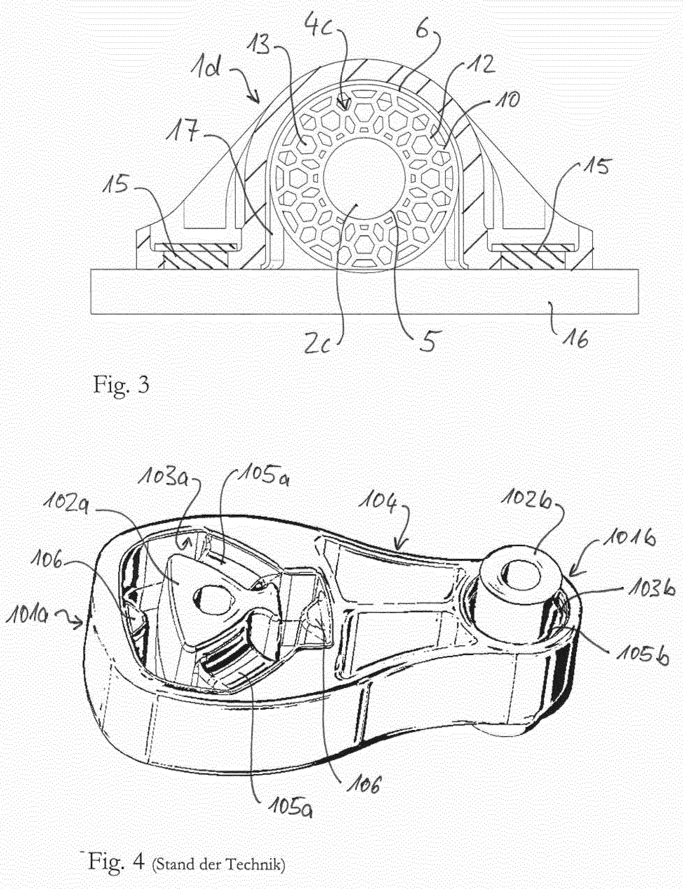

Fig. 4 zeigt eine Drehmomentstütze mit bekannten Torsionsdämpferausführungen 101a, 101b. Die Drehmomentstütze umfasst die Übertragungskörper 102a und 102b, die jeweils in Ausnehmungen 103a und 103b einer hebelförmigen Drehmomentstütze 104 angeordnet sind. Die Drehmomentstütze 104 dämpft z.B. über die Torsionsdämpfer 101a, 101b an Ihren Enden Bewegungen eines Motorblocks zur Karosserie bei Drehmomentveränderungen.

Dazu ist hier an einem Ende der Übertragungskörper 102a über Elastomerriegel 105a in der Ausnehmung 103a abgestützt. In der Ausnehmung 103a sind weitere Elastomernocken 106 angeordnet, die bei extremen Verformungen der Elastomerriegel 105a den Übertragungskörper 102a zusätzlich elastisch dämpfend abstützen.

Am anderen Ende ist der rohrförmige Übertragungskörper 102b über eine ebenfalls rohrförmige Elastomerhülse 105b in der Ausnehmung 103b elastisch gelagert. Übertragungskörper 102a und 102b sowie das Stützelement 104 sind beispielsweise aus metallischen Werkstoffen ausgebildet. Es ist auch bekannt den Stützkörper 104 aus einem Kunststoffwerkstoff herzustellen, um Gewicht zu sparen. Die Fertigung solcher Torsionsdämpfer 101a, 101b und solcher Drehmomentstützen 104 ist vergleichsweise aufwendig. Die einzelnen Bauteile, Stützelement 104 und Übertragungskörper 102a und 102b sowie die Elastomerkörper 105a, 105b 106 müssen zunächst getrennt und unabhängig voneinander hergestellt werden um dann in mehr oder weniger aufwendigen Fügeverfahren miteinander verbunden werden zu können. Dazu sind oft aufwändige Oberflächenbehandlungen und langwierige thermische Form- und Fügeverfahren erforderlich. Eine ähnliche Lösung zeigt die US 2,915,306. US 2009/0078079 A1 zeigt einen Torsionsdämpfer, bei dem ein faserverstärktes Polyamidmaterial eine Labyrinthmembranstruktur bildet, die im Innern einen Übertragungskörper trägt und bei der in einem Außenbereich ein Stütz- oder Verstärkungskörper eingebettet ist. Weitere Ausführungen von Torsionsdämpfer mit torsionselastischen Strukturen zeigen die US 2010 / 055999 A1 und WO 2014 / 019787 A1. Es besteht also die Aufgabe einen verbesserten Torsionsdämpfer bereitzustellen, bei dem diese Nachteile zumindest teilweise verringert sind.

### ZUSAMMENFASSUNG DER ERFINDUNG

Diese Aufgabe erfüllt ein Torsionsdämpfer gemäß Anspruch 1. Nach einem erste Aspekt betrifft die vorliegende Erfindung einen Torsionsdämpfer mit einem drehelastischen Ringelement mit einer inneren und einer äußeren Koppelfläche, einem an der inneren Koppelfläche fixierten inneren Übertragungskörper und einem an der äußeren Koppelfläche fixierten Stützelement, wobei die innere und die äußere Koppelfläche des Ringelements einstückig über eine torsionselastische Membranstruktur miteinander verbunden sind.

Die Membranstruktur ist aus mehreren radial und/oder konzentrisch zu einer Symmetrieachse des Ringelements verlaufenden und sich entlang der Symmetrieachse erstreckenden biegeelastisch, verformbaren Stützelementen ausgebildet. Mit so einer Struktur kann die Torsionselastizität in Umfangsrichtung sowie eine gegebenenfalls gewünschte Radialelastizität eingestellt werden.

Die radial verlaufenden Stützelemente bilden Membranspeichenelemente, deren Zwischenräume durch die jeweils versetzt angeordneten, konzentrisch verlaufenden Stützelemente überbrückt werden, so dass eine symmetrische, wabenartige Kammerstruktur entsteht, bei der sich die prismatisch gestalteten Kammern konzentrisch zur und in Richtung der Symmetrieachse verlaufen.

Dabei übernehmen die radial verlaufenden Stützelemente, die beispielsweise als Radialmembranen ausgebildet sind, die torsionselastische Übertragung von in Umfangsrichtung bzw. um die Symmetrieachse wirkende Drehkräfte zwischen dem inneren Übertragungskörper und dem äußeren Stützelement. Die biegeelastisch, verformbaren Stützelemente übertragen dabei die Torsionskräfte elastische dämpfend. Werkstoff, Gestalt und Abmessungen der Stützelemente bestimmen die Elastizität und die Dämpfungseigenschaften.

Bei so einer Ausführung ist es möglich, die erforderliche Torsionselastizität nicht allein über die mechanischen Eigenschaften des verwendeten Elastomerwerkstoffs (z. B. Shore-Härte, Dehnvermögen) einzustellen sondern auch über die Gestaltung der Membranstruktur. Damit ist es möglich, auch solche Werkstoffe zu verwenden, bei denen die Elastizität des Werkstoffs für das Ringelement vergleichsweise gering ist und die gewünschten elastischen und/oder dämpfenden Eigenschaften nicht über Stauchung bzw. Dehnung des Werkstoffs erreicht wird sondern weitgehend über elastische Biegeverformungen, die durch die entsprechende geometrische Gestaltung der Membranstruktur realisierbar sind.

Weitere Aspekte und Merkmale der vorliegenden Erfindung ergeben sich aus den abhängigen Ansprüchen, der beigefügten Zeichnung und der nachfolgenden Beschreibung bevorzugter Ausführungsformen.

### KURZBESCHREIBUNG DER ZEICHNUNG

Ausführungsformen der Erfindung werden nun beispielhaft und unter Bezugnahme auf die beigefügte Zeichnung beschrieben. Darin zeigt:
- Fig. 1: eine perspektivische Darstellung einer Drehmomentstütze mit erfindungsgemäßen Torsionsdämpfern;
- Fig. 2: eine perspektivische Schnittdarstellung einer Lagerschelle mit einem erfindungsgemäßen Torsionsdämpfer;
- Fig. 3: eine Schnittansicht von vorne einer Lagerschelle mit einem weiteren Ausführungsbeispiel eines erfindungsgemäßen Torsionsdämpfers und
- Fig. 4: eine Drehmomentstütze mit Torsionsdämpfern gemäß dem Stand der Technik.

### BESCHREIBUNG VON AUSFÜHRUNGSFORMEN

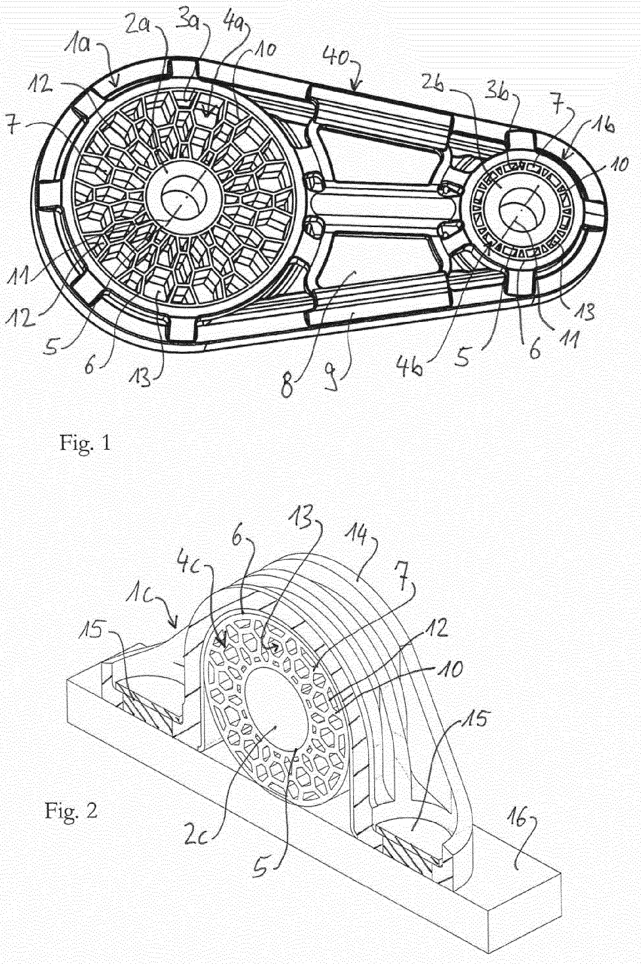

In Fig. 1 ist eine Ausführungsform in Übereinstimmung mit der vorliegenden Erfindung veranschaulicht. Vor einer detaillierten Beschreibung folgen zunächst allgemeine Erläuterungen zu Ausführungsformen.

Die konzentrisch verlaufenden Stützelemente verkürzen die ungestüzten radialen Längen der radial verlaufenden Stützelemente und versteifen diese gegen axialen Versatz, also gegen Verformungen quer zur Symmetrieachse.

Es gibt Ausführungen bei denen die Koppelflächen und/oder die Membranstruktur selbst aus einem thermoplastischen Elastomerwerkstoff (TPE) ausgebildet sind. Diese Werkstoffe haben den Vorteil, dass sie die gummielastischen Eigenschaften vernetzter Elastomere (z.B. Gummiwerkstoffe) aufweisen und gleichzeitig in thermoplastischen Verfahren verarbeitbar sind.

Durch die thermoplastische Verarbeitbarkeit ergeben sich gegenüber vernetzten Elastomeren wie Gummi eine verbesserte Rezyklierbarkeit und Schweißbarkeit. Die Werkstoffe können auch zu integralen Bauteilen (z.B. Mehrkomponentenspritzgießen, Koextrusionsverfahren) mit unterschiedlichen Werkstoffen verarbeitet werden. Damit können bei der Herstellung komplexer Bauteile Fertigungsschritte eingespart werden.

Durch die Elastomereigenschaften dieser Werkstoffe lassen sich die gewünschten Dämpfungs- und Federungseigenschaften nicht nur durch die geometrische Gestaltung sondern auch durch die spezifische Kombination der Geometrie der Membranstruktur und der verwendeten Werkstoffe besonders genau einstellen.

Typische thermoplastische Elastomerwerkstoffe (TPEs) sind beispielsweise: Copolyamide (TPA), Copolyester (TPC), Polyolefin-Elastomere (TPO), Polystyrol-Elastomere (TPS), Polyurethan-Elastomere (TPU), Polyolefin Blends mit vernetztem Kautschuk (TPV) sowie TPE's auf Basis von PVC (Polyvinylchlorid) oder PBA.

Es gibt auch Ausführungen, bei denen klassische Elastomerwerkstoffe für die Membranstruktur verwendet werden, wie Kautschuke mit unterschiedlichen Eigenschaften, die weit- oder engmaschig vernetzt werden. Dazu gehören Natur- und Synthesekautschuke, sogenannte M-Kautschuke, O-Kautschuke, Q-(Silikon)-Kautschuke, T-Kautschuke und U-Kautschuke. Zusammensetzungen und Bezeichnungen sind beispielsweise der DIN ISO 1629 entnehmbar.

Es gibt Ausführungen, bei denen die radial verlaufenden Stützelemente und die konzentrisch verlaufenden Stützelemente unterschiedliche (mechanische) Eigenschaften aufweisen und/oder aus unterschiedlichen Werkstoffen ausgebildet sind. Auch diese Maßnahmen dienen dazu, die gewünschten Eigenschaften des Torsionsdämpfers noch spezifischer und belastungsorientierter einzustellen.

Bei einer Ausführung, bei welcher das Ringelement aus einem Stranggussprofil ausgebildet ist, lässt sich eine besonders kostengünstige Vorfertigung von Halbzeugen für die Ringelemente realisieren, von denen diese dann scheibenweise abgelängt werden können.

Bei einer Ausführung, bei welcher das Stützelement über ein das Ringelement wenigstens teilweise umfassendes Organoblech-Bauteil mit seiner äußeren Koppelfläche verbunden ist, lässt sich das Ringelement mit seinen elastischen Eigenschaften über ein weitgehend frei gestaltbares (formbares) Organoblech-Bauteil mit unterschiedlichsten Geometrien eines Stützelements verbinden.

Der Begriff "Organoblech" bezeichnet in diesem Zusammenhang ein ebenes Thermoplast-Prepreg mit Faserverstärkung. Dabei sind im Wesentlichen flächig und eben angeordnete Faserfilamente, die eine oder mehrere Verstärkungslagen bilden, in eine Thermoplastmatrix eingebettet. Andere Organoblechhalbzeuge umfassen profilierte (z.B. U-, T-Profile), vorgeformte oder rohrförmige (z.B. mit Rechteck-, Quadrat- oder Rundquerschnitt) Bauteile.

Zur Herstellung eines solchen Organoblechs wird beispielsweise in einem kontinuierlichen Prozess mit Hilfe einer isobaren, beheizten Doppelbandpresse ein Thermoplastwerkstoff (zum Beispiel als Pulver) zwischen die Verstärkungslagen (Fasern) eingebracht, dort aufgeheizt/geschmolzen und zwischen die Filamente gepresst. Organobleche lassen sich danach, ähnlich wie metallische Bleche, bearbeiten und im erwärmten Zustand auch verformen. Sie zählen zu den Hochleistungsverbundkunststoffen. Die Thermoplastmatrix kann mit kompatiblen TPEs verschweißt werden.

Weitere Ausführungen der Erfindung betreffen eine Lagerschelle mit einem erfindungsgemäßen Torsionsdämpfer und eine Drehmomentstütze mit wenigstens einem erfindungsgemäßen Torsionsdämpfer.

Zurückkommend zu Fig. 1 veranschaulicht diese Ausführungsformen eines erfindungsgemäßen Torsionsdämpfers 1a, 1b, die in einer hebelartigen Drehmomentstütze 40 angeordnet sind.

Die Drehmomentstütze 40 umfasst zwei hülsenförmige Übertragungskörper 2a und 2b die jeweils zentriert in einer Ausnehmung 3a, 3b angeordnet sind. Zwischen den Übertragungskörpern 2a und 2b sind jeweils Ringelemente 4a, 4b ausgebildet, die jeweils eine rohrförmige innere Koppelfläche 5 und eine äußere Koppelfläche 6 umfassen, wobei die innere und äußere Koppelfläche 5, 6 jeweils über eine torsionselastische Membranstruktur miteinander verbunden sind.

Im dargestellten Ausführungsbeispiel sind die innere Koppelfläche 5, äußere Koppelfläche 6 und die Membranstruktur 7 einstückig aus einem thermoplastischen Elastomerwerkstoff ausgebildet. Die Übertragungskörper 2a, 2b sind aus einem metallischen Werkstoff ausgebildet. In anderen Ausführungen können die Übertragungskörper 2a, 2b auch aus einem Kunststoffwerkstoff ausgebildet sein.

Die Drehmomentstütze 40 ist als Kompositbauteil ausgebildet mit einem Grundkörper 8, der bereichsweise mit Verstärkungselementen 9 versehen ist. Der Grundkörper 8 kann aus einem metallischen Blechkörper oder einem Organoblech-Bauteil gebildet sein. Die Verstärkungselemente 9 sind belastungsorientiert beispielsweise in einem anschließenden Spritzgussprozess an den Grundkörper 8 angeformt.

Die innere Koppelfläche 5 ist stoffschlüssig mit dem Übertragungskörper 2a, 2b verbunden und die äußere Koppelfläche 6 ist ebenfalls stoffschlüssig mit dem Grundkörper 8 gekoppelt (beispielsweise durch Verkleben, Anspritzen, Verschmelzen, Verschweißen oder ähnliches).

Eine Membranstruktur 7, welche die innere Koppelfläche 5 und die äußere Koppelfläche 6 miteinander verbindet, umfasst im Falle des Übertragungskörpers 2a radial verlaufende Stützelemente 10 und konzentrisch zu einer Symmetrieachse 11 verlaufende Stützelemente 12. Die radial verlaufenden Stützelemente 10 bilden Membranspeichenelemente, deren Zwischenräume durch die jeweils versetzt angeordneten, konzentrisch verlaufenden Stützelemente 12 überbrückt werden, so dass eine symmetrische, wabenartige Kammerstruktur entsteht, bei der sich die prismatisch gestalteten Kammern 13 konzentrisch zur und in Richtung der Symmetrieachse 11 verlaufen.

Beim Torsionsdämpfer 1b ist der Aufbau des Ringelements 4b analog. Hier sind jedoch wegen des geringen Abstandes zwischen der inneren Koppelfläche 5 und der äußeren Koppelfläche 6 lediglich radial verlaufende Stützelemente 10 vorgesehen.

Bei festliegendem Übertragungskörper 2a wird beispielsweise eine Hebelkraft (F) über den Übertragungskörper 2b und das Ringelement 4b in die Drehmomentstütze 40 eingeleitet. Dabei entsteht eine Torsionsbelastung in der Membranstruktur 7 zwischen der mit der Drehmomentstütze 1 gekoppelten äußeren Koppelfläche 6 und der mit dem Übertragungskörper 2a gekoppelten inneren Koppelfläche 5.

Das Torsionsmoment im Rotationsdämpfer 1a wird dabei über die Membranstruktur 7 des Ringelements 4a elastisch, dämpfend übertragen. Dabei verformen sich die Stützelemente 10, 12 entsprechend der Belastung. Dabei treten zum einen Biege- und Beulverformungen in den Stützelementen 10, 12 auf und zum anderen, insbesondere bei Verwendung eines thermoplastischen Elastomerwerkstoffes, auch Dehnungs- oder Stauchverformungen, die zu einer gedämpften Drehmoment-/Torsionsübertragung zwischen der Drehmomentstütze 40 und dem Übertragungskörper 2a führt. Die Verformung des Ringelementes 4a, 4b erfolgt dabei in Abhängigkeit von den Werkstoffeigenschaften und der Geometrie der Stützelemente 10, 12 bzw. der Membranstruktur 7.

Fig. 2 zeigt einen anderen Anwendungsfall für einen erfindungsgemäßen Torsionsdämpfer 1c mit einem Ringelement 4c, welches analog zum oben beschriebenen Ringelement 4a aufgebaut ist. Das Ringelement 4c wird hier von einer Lagerschelle 14 umgeben, die als Stützelement dient und über zwei Befestigungspunkte 15 mit einem Grundkörper 16 verbunden ist.

Die Kopplung zwischen der Innenwand der Lagerschelle 14 und der äußeren Koppelfläche 6 erfolgt hier entweder kraftschlüssig, indem das Ringelemente 4c mit Übermaß in die Lagerschelle 14 hinein gequetscht ist und so kraftschlüssig mit dieser gekoppelt ist. Alternativ oder ergänzend kann die innige Verbindung zwischen der äußeren Koppelfläche 6 und der Lagerschelle 14 auch zusätzlich stoffschlüssig durch verkleben erfolgen.

Es gibt auch Ausführungen, bei denen eine formschlüssige Kopplung über entsprechende Oberflächenstrukturen (Verzahnung oder ähnliches) erfolgt.

Im Inneren des Ringelements 4c ist ein bolzenförmiger Übertragungskörper 2c mit der inneren Koppelfläche 5 verbunden, so dass auch hier Torsionskräfte elastisch, plastisch zwischen dem Übertragungskörper 2c und der Lagerschelle 14 bzw. dem Grundkörper 16 übertragbar sind.

Fig. 3 zeigt eine Variante 1d, des in Fig. 2 dargestellten Torsionsdämpfers 1c, bei dem das Ringelement 4c über seine äußere Koppelfläche 6 mit einer Koppelspange 17 verbunden ist, die in ihrer Gestalt an das Aufnahmeprofil der Lagerschelle 14 angepasst ist und als Stützelement dient. Die Koppelspange ist hier als beispielsweise als Organoblech-Bauteil ausgebildet und stoffschlüssig mit dem Ringelement 4c verbunden.

In der dargestellten Ausführung ist das Ringelement 4c mit konzentrischen inneren und äußeren Koppelflächen 5 und 6 versehen. In einer anderen Ausführung kann die äußere Koppelfläche 6 auch an das Aufnahmeprofil der Lagerschelle 14 bzw. der Koppelspange 17 angepasst sein.

Es gibt auch Ausführungen, bei denen die als Organoblech ausgebildete Koppelspange 17 in einem Spritzgussvorgang mit dem Ringelement 4c versehen wird, bei dem auch gleichzeitig der Übertragungskörper 2c mit eingeformt wird.

In einer anderen Ausführung kann die Koppelspange 17 auch als die äußere Koppelfläche 6 vollständig umfassende Hülse ausgebildet sein. Bei so einer Ausführung kann eine Baugruppe, die aus Übertragungskörper 2c, Ringelement 4c und Koppelspange 17 gebildet ist, sehr montagefreundlich zusammen mit der Lagerschelle 14 angebracht werden, ohne das beim Einfügen des Ringelementes 4c in die Lagerschelle 14 Undefinierte Verformungen auftreten, welche die Eigenschaften des Torsionsdämpfers 1d beeinflussen.

Weitere Alternativen ergeben sich im Rahmen der Ansprüche.

### BEZUGSZEICHENLISTE

- 101a, 101b: Torsionsdämpfer
- 102a, 102b: Übertragungskörper
- 103a, 103b: Ausnehmung
- 104: Drehmomentstütze/Stützelement
- 105a: Elastomerriegel
- 105b: Elastomerhülse
- 106: Elastomernocke
- 1a, 1b, 1c, 1d: Torsionsdämpfer
- 2a, 2b, 2c: Übertragungskörper
- 3a, 3b: Ausnehmung
- 4a, 4b, 4c: Ringelement
- 5: Innere Koppelfläche
- 6: Äußere Koppelfläche
- 7: Membranstruktur
- 8: Grundkörper
- 9: Verstärkungselement
- 10: Stützelement (radial)
- 11: Symmetrieachse
- 12: Stützelement (konzentrisch)
- 13: Kammern
- 14: Lagerschelle/Stützkörper
- 15: Befestigungspunkt
- 16: Grundkörper
- 17: Koppelspange/Stützkörper
- 40: Koppelhebel/Stützkörper

## Patentansprüche

1. Torsionsdämpfer (1a; 1b; 1c; 1d) mit
einem drehelastischen Ringelement (4a; 4b; 4c) mit einer inneren und einer äußeren Koppelfläche (5, 6)
einem an der inneren Koppelfläche (5) fixierten inneren Übertragungskörper (2a; 2b; 2c) und
einem an der äußere Koppelfläche (6) fixierten Stützkörper (40; 14; 17), wobei
die innere und die äußere Koppelfläche (5, 6) des Ringelements (4a; 4b; 4c) einstückig über eine torsionselastische Membranstruktur (7) miteinander verbunden sind, die
aus mehreren radial und konzentrisch zu einer Symmetrieachse (11) des Ringelements (4a; 4b; 4c) verlaufenden und sich entlang der Symmetrieachse (11) erstreckenden, biegeelastisch verformbaren Stützelementen (10, 12) ausgebildet ist und
die radial verlaufenden Stützelemente (10) Membranspeichenelemente bilden, deren Zwischenräume durch die jeweils versetzt angeordneten, konzentrisch verlaufenden Stützelemente (12) überbrückt werden, **dadurch gekennzeichnet, dass** eine symmetrische, wabenartige Kammerstruktur entsteht, bei der prismatisch gestalteten Kammern (13) konzentrisch zur und in Richtung einer Symmetrieachse (11) verlaufen.

2. Torsionsdämpfer (1a; 1b; 1c; 1d) nach Anspruch 1, wobei die Koppelflächen (5, 6) und/oder die Membranstruktur (7) aus wenigstens einem thermoplastischen Elastomerwerkstoff (TPE) und/oder einem Kautschukwerkstoff ausgebildet sind, insbesondere aus Copolyamid (TPA), Copolyester (TPC), Polyolefin-Elastomer (TPO), Polystyrol-Elastomer (TPS), Polyurethan-Elastomer (TPU), Polyolefin Blend mit vernetztem Kautschuk (TPV) sowie TPE auf Basis von PVC (Polyvinylchlorid) oder PBA.

3. Torsionsdämpfer (1a; 1b; 1c; 1d) nach Anspruch 1 oder 2, wobei die radial verlaufenden Stützelemente (10) und die konzentrisch verlaufenden Stützelemente (12) unterschiedliche Eigenschaften aufweisen und/oder aus unterschiedlichen Werkstoffen ausgebildet sind.

4. Torsionsdämpfer (1a; 1b; 1c; 1d) nach Anspruch 1, 2 oder 3, wobei das Ringelement (4a; 4b; 4c) aus einem Stranggussprofil ausgebildet ist.

5. Torsionsdämpfer (1a, 1b, 1d) nach einem der vorhergehenden Ansprüche, wobei der Stützkörper (40; 14) ein das Ringelement (4c) wenigstens teilweise umfassendes Organoblech-Bauteil (17) umfasst, das mit der äußeren Koppelfläche (6) verbunden ist.

6. Drehmomentstütze (40) mit einem Torsionsdämpfer (1a, 1b) nach einem der vorhergehenden Ansprüche.

7. Drehmomentstütze (40) nach Anspruch 6, mit einem Grundkörper, der als Organoblech-Bauteil ausgebildet ist

## Claims

1. A torsional damper (1a; 1b: 1c; 1d), comprising
a torsionally elastic ring element (4a; 4b; 4c) having an inner and outer coupling surface (5, 6),
an inner transmission body (2a; 2b; 2c) fixed to the inner coupling surface (5) and
a support body (40; 14; 17) fixed to the outer coupling surface (6), wherein the inner and outer coupling surface (5, 6) of the ring element (4a; 4b; 4c) are integrally connected to each other via a torsionally elastic membrane structure (7), which
is formed of a plurality of support elements (10, 12) which can be deformed with bending elasticity, run radially and concentrically to a symmetry axis (11) of the ring element (4a; 4b; 4c) and extend along the symmetry axis (11) and
the radially extending support elements (10) form membrane spoke elements, the intermediate spaces of which are bridged by the concentrically running support elements (12) which are respectively arranged in an offset manner, **characterized in that**
a symmetric, honeycomb-like chamber structure is created, in which prismatically shaped chambers (13) extend concentric to and in the direction of a symmetry axis (11).

2. The torsional damper (1a; 1b; 1c; 1d) according to claim 1, wherein the coupling surfaces (5, 6) and/or the membrane structure (7) are formed of at least one thermoplastic elastomer material (TPE) and/or a rubber material, in particular of copolyamide (TPA), copolyester (TPC), polyolefin elastomer (TPO), polystyrene elastomer (TPS), polyurethane elastomer (TPU), polyolefin blend with cross-linked rubber (TPV) as well as TPE on the basis of PVC (polyvinyl chloride) or PBA.

3. The torsional damper (1a; 1b; 1c; 1d) according to claim 1 or 2, wherein the radially running support elements (10) and the concentrically running support elements (12) have different characteristics and/or are made of different materials.

4. The torsional damper (1a; 1b; 1c; 1d) according to claim 1, 2 or 3, wherein the ring element (4a; 4b; 4c) is made of a continuous casting profile.

5. The torsional damper (1a, 1b, 1d) according to any of the preceding claims, wherein the support body (40; 14) comprises an organic sheet component (17) which at least partially embraces the ring element (4c), said organic sheet component being connected to the outer coupling surface (6).

6. A torque support (40) comprising a torsional damper (1a, 1b) according to any of the preceding claims.

7. The torque support (40) according to claim 6, comprising a main body that is designed as an organic sheet compound.

## Revendications

1. Amortisseur de torsion (1a ; 1b ; 1c ; 1d) comprenant
un élément annulaire (4a ; 4b ; 4c) à élasticité rotative, doté de surfaces d'accouplement intérieure et extérieure (5, 6),
un corps de transmission (2a ; 2b ; 2c) intérieur fixé à la surface d'accouplement intérieure (5),
un corps d'appui (40 ; 14 ; 17) fixé à la surface d'accouplement extérieure (6), sachant que
les surfaces d'accouplement intérieure et extérieure (5, 6) de l'élément annulaire (4a ; 4b ; 4c) sont reliées d'un seul tenant entre elles, par l'intermédiaire d'une structure à membrane (7) à élasticité en torsion qui est réalisée à partir de plusieurs éléments d'appui (10, 12) déformables de façon élastique en flexion, qui s'étendent radialement et de façon concentrique par rapport à un axe de symétrie (11) de l'élément annulaire (4a ; 4b ; 4c) et sont disposés le long de l'axe de symétrie (11), et que
les éléments d'appui (10) radiaux forment des éléments rayons de membrane dont les espaces intermédiaires sont enjambés par les éléments d'appui (12) disposés respectivement de façon décalée et s'étendant de façon concentrique, **caractérisé en ce que**
l'on crée une structure de chambres alvéolaire symétrique, dans laquelle des chambres (13) de forme prismatique s'étendent de façon concentrique par rapport à un axe de symétrie (11) et en direction de celui-ci.

2. Amortisseur de torsion (1a ; 1b ; 1c ; 1d) selon la revendication 1, dans lequel les surfaces d'accouplement (5, 6) et/ou la structure à membrane (7) sont réalisées à partir d'au moins une matière élastomère thermoplastique (TPE) et/ou d'une matière à base de caoutchouc, notamment de copolyamide (TPA), copolyester (TPC), élastomère à basé oléfinique (TPO), élastomère styrénique (TPS), élastomère polyuréthanne (TPU), un mélange de polyoléfines avec du caoutchouc réticulé (TPV) ainsi que de TPE à base de PVC (Polychlorure de vinyle) ou de PBA.

3. Amortisseur de torsion (1a ; 1b ; 1c ; 1d) selon la revendication 1 ou 2, dans lequel les éléments d'appui (10) radiaux et les éléments d'appui (12) concentriques présentent des propriétés différentes et/ou sont réalisés à partir de matériaux différents.

4. Amortisseur de torsion (1a ; 1b ; 1c ; 1d) selon la revendication 1, 2 ou 3, dans lequel l'élément annulaire (4a ; 4b ; 4c) est réalisé à partir d'un profilé de coulée continue.

5. Amortisseur de torsion (1a ; 1b ; 1c ; 1d) selon une des revendications précédentes, dans lequel l'élément d'appui (40 ; 14) comprend un composant en tôle organique (17) qui entoure au moins en partie l'élément annulaire (4c) et est relié à la surface d'accouplement extérieure (6).

6. Elément d'appui de couple (40) comprenant un amortisseur de torsion (1a, 1b) selon une des revendications précédentes.

7. Elément d'appui de couple (40) selon la revendication 6, comprenant un corps de base qui est réalisé sous forme de composant en tôle organique.
